# EUROPÄISCHE PATENTSCHRIFT

(11) **EP 0 868 966 B1**
(45) Veröffentlichungstag und Bekanntmachung des Hinweises auf die Patenterteilung: **02.05.2002**
(21) Anmeldenummer: 98102984.6
(22) Anmeldetag: 20.02.1998
(51) Int. Cl.: B23Q 3/06

(54) **Kupplung für quaderförmige Aufnahmeteile zum Aufspannen von Werkstücken**
Coupling of parallelpiped receivers for clamping workpieces
Dispositif d'accouplement pour des logements parallélepipédiques pour serrer des pièces

(30) Priorität: 03.04.1997 DE 29705895 U
(43) Veröffentlichungstag der Anmeldung: 07.10.1998
(73) Patentinhaber: Horst Witte Entwicklungs- und Vertriebs-KG, 21369 Nahrendorf (DE)
(72) Erfinder: Witte, Horst, 21369 Nahrendorf (DE)
(74) Vertreter: von Raffay, Vincenz, Dipl.-Ing.

(56) Entgegenhaltungen:
- EP-B- 0 222 147
- WO-A-92/08572
- WO-A-96/35547
- DE-A- 3 329 988
- DE-C- 4 001 568
- FR-A- 1 578 469
- GB-A- 2 272 176
- US-A- 1 874 519

## Beschreibung

Die Erfindung betrifft eine Kupplung nach dem Oberbegriff des Anspruches 1.

Aus der EP-B1 222 147 ist ein System zum Aufbau von Vorrichtungen zum Aufspannen von Werkstücken in definierter und reproduzierbarer Lage bekannt. Dieses System weist hohlquaderförmige, mehr oder weniger langgestreckte Aufnahmeteile auf, die mit querschnittsgleichen, in regelmäßigen Koordinatenabständen angeordneten Paß- und Querbohrungen versehen sind. Bei der aus der EP-B1 222 147 bekannten Ausführungsform ist jeweils eine Reihe von Paß- oder Querbohrungen an den zueinander senkrecht stehenden Aufspannflächen der Aufnahmeteile vorgesehen. Es sind aber auch Ausführungsformen bekannt, bei denen mehrere, beispielsweise zwei oder drei, parallele Reihen mit derartigen Bohrungen vorgesehen sind, die dann wieder in dem durch die regelmäßigen Koordinatenabstände bestimmten Rastermaß angeordnet sind. An den Stirnseiten sind die hohlquaderförmigen Aufnahmeteile offen. Wenn eine Verbindung an diesen Stirnseiten erfolgen sollte, oder aber dort besondere Endstücke befestigt wurden, so geschah dieses mit Hilfe der Paßschrauben und Mutternteile, wie sie aus der EP-B1 222 147 bekannt sind. Dieses war relativ zeitaufwendig.

Aus der DE-C-40 01 568 ist eine Schraubenverbindung für Aufnahmeteile der eingangs genannten Art bekannt. Diese bekannte Schraubenverbindung besteht aus einem schwenkbaren Schraubenkopf, der an einem Schraubenbolzen 2 schwenkbar gelagert ist. Diese Schraubenverbindung ist in eine der Bohrungen der Aufnahmeteile einsteckbar. Nach Schwenkung des Schraubenkopfes um ca. 90° wirkt dieser als Haken. Durch Aufschrauben einer Mutter auf den Schraubenkopf, die durch eine Bohrung in dem zu befestigendem Aufnahmeteil zugänglich ist, wird die Verbindung zwischen den Aufnahmeteilen hergestellt.

Der Erfindung liegt nun die Aufgabe zugrunde, eine Kupplung der eingangs genannten Art zu schaffen, die ein schnelles Verbinden in unterschiedlichen Winkelstellungen ermöglicht und kostengünstig hergestellt werden kann.

Diese Aufgabe wird durch das Kennzeichen des Anspruches 1 gelöst.

Die erfindungsgemäße Kupplung weist einen Ansatz auf, der paßgenau in den entsprechenden bearbeiteten Hohlraum an der zu verbindenden Stirnseite eines Aufnahmeteils einsteckbar ist. Damit diese Lage unverrückbar und reproduzierbar eingenommen und aufrechterhalten wird, sind mehrere hakenförmige Elemente in dem Ansatz gelagert, von denen jeder formschlüssig in den Eingriff mit dem Mantel einer angrenzenden Paß-oder Querbohrung in dem Aufnahmeteil schwenkbar ist. Hierdurch wird der Ansatz sicher und fest in einer genau definierten Lage gehalten. Die Hakenelemente können wieder gelöst werden, so daß die Kupplung dann wieder entfernt werden kann. Die Kupplung bildet zusammengebaut ein Bauteil, das entsprechend leicht gehandhabt werden kann. Das Hakenelement ist als Schneckenrad ausgebildet und durch eine ebenfalls in dem Ansatz drehbar gelagerte Schnecke betätigbar. Die durch die Segmentform gebildete Eingriffsfläche des Schneckenradsegmentes gelangt formschlüssig an dem Mantel der ausgewählten Bohrung zur Anlage, wenn die Verriegelungsstellung eingenommen wird. Die Schnecke ist durch dieselbe Öffnung betätigbar, an deren Mantel die Eingriffsfläche zur Anlage gelangt. Hierdurch wird die Handhabung erleichtert, d.h. nur eine Bohrung wird "benötigt", d.h. nur eine Bohrung muß zugänglich sein.

Wenn zwei hohlquaderförmige Aufnahmeteile miteinander verbunden werden sollen, so weist die Kupplung entsprechend zwei Ansätze auf. Es ist auch möglich, mehr als zwei Aufnahmeteile miteinander zu verbinden, die dann in einem Winkel zueinander stehen. Eine entsprechende Anzahl von Ansätzen mit Hakenelementen weist die Kupplung dann auf. Es ist auch möglich, die Kupplung als Abschlußelement auszubilden, das den Hohlraum an der entsprechenden Stirnseite des Aufnahmeteiles verschließt oder der Anbringung anderer Bauteile dienen kann. In diesem Falle ist nur ein Ansatz vorhanden.

Wenn mehrere Ansätze an einer Kupplung vorhanden sind, dann verlaufen die Längsachsen so wie in Anspruch 2 angegeben.

Wenn die beiden zu verbindenden Aufnahmeteile miteinander fluchten, tun dieses auch die Längsachsen. Wenn die Aufnahmeteile einen Winkel, beispielsweise einen rechten Winkel, zueinander aufweisen sollen, verlaufen die Längsachsen der Aufnahmeteile entsprechend. Sie treffen sich dann in den Mittelpunkten der Stirnseiten der zu verbindenden Aufnahmeteile.

Durch die Kupplung nach der Erfindung ist es auch möglich, für einen besseren ästhetischen Eindruck bei dem bekannten System zu sorgen und insbesondere einen formschönen Abschluß an den hohlquaderförmigen Aufnahmeteilen zu erreichen.

Im folgenden wird die Erfindung unter Hinweis auf die Zeichnung anhand eines Ausführungsbeispieles näher erläutert.

Es zeigt:
- Fig. 1: einen Querschnitt durch eine Ausführungsform einer Kupplung nach der Erfindung zur Verbindung zweier, fluchtender, hohlquaderförmiger Aufnahmeteile, wobei die Hakenelemente einmal gelöst sind und sich einmal im formschlüssigen Eingriff befinden;
- Fig. 2: eine der Fig. 1 entsprechende Ansicht, jedoch mit um 90° zueinander gedrehten Hakenelementen in den einander gegenüberliegenden Ansätzen; und
- Fig. 3: einen Schnitt durch eine Ausführungsform zum Verschließen eines hohlquaderförmigen Aufnahmeteils mit Hilfe einer Kupplung mit einem Ansatz und einer Abschlußplatte.

Die in der Zeichnung dargestellte Kupplung dient normalerweise der Verbindung von zwei oder mehreren hohlquaderförmigen Aufnahmeteilen 1 und 2. Solche Aufnahmeteile sind aus der EP-B1 222 147 grundsätzlich bekannt. Die in der Zeichnung dargestellten. Aufnahmeteile 1 und 2 weisen zum Unterschied zu den bekannten Aufnahmeteilen zwei nebeneinanderliegende Reihen von Paß- und Querbohrungen 14 auf, die in einem vorgegebenen Rastermaß zueinander angeordnet sind, um für ein Aufspannen in definierter und reproduzierbarer Lage zu sorgen.

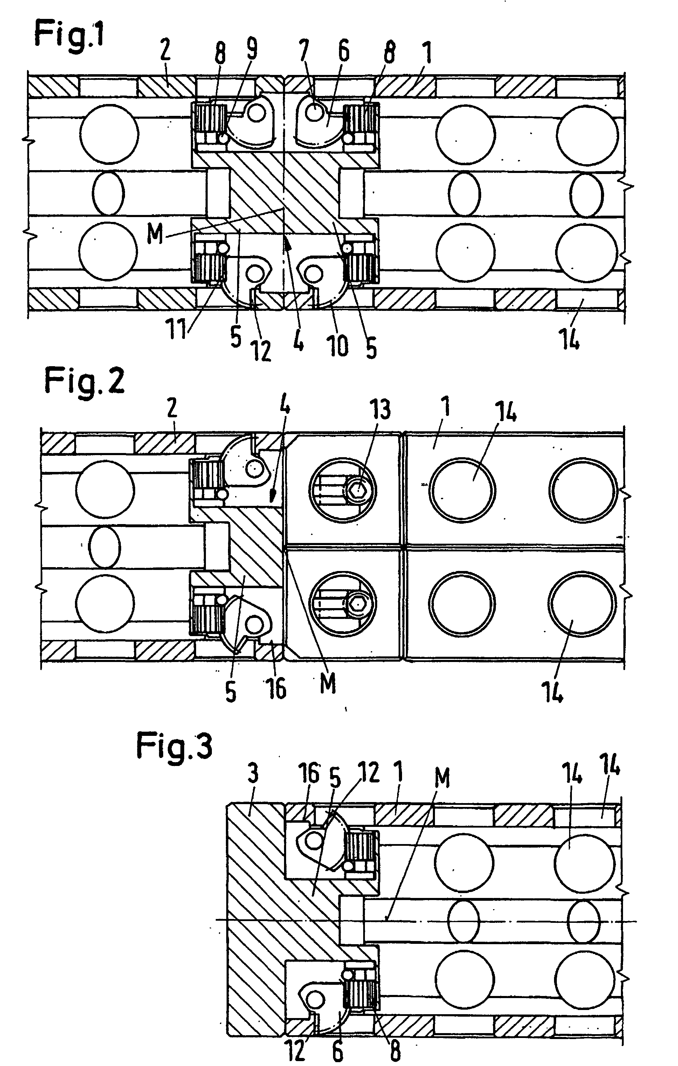

Die eigentliche Kupplung 4 weist bei der Ausführungsform nach den Fig. 1 und 2 zwei gegenüberliegende Ansätze 5 auf, die gleich ausgebildet sind. Die beiden Ansätze bei der Ausführungsform nach den Fig. 1 und 2 sind symmetrisch zu der Verbindungsebene angeordnet.

Grundsätzlich ist nur ein Ansatz 5 erforderlich, um eine Kupplung 4 zu bilden, wie dieses beim Betrachten der Fig. 3 deutlich wird, nämlich dann, wenn lediglich eine Abschlußplatte 3 an der Stirnseite eines Aufnahmeteiles 1 befestigt werden soll.

In jedem Ansatz sind Hakenelemente in Form von Schneckenradsegmenten 6 drehbar gelagert. Die Lagerung erfolgt mit Hilfe von Zapfen oder Wellen 7. Die als Schneckenrad ausgebildete Umfangsfläche ist mit 10 bezeichnet. Es ist ohne weiteres erkennbar, daß am Ende einer solchen Fläche 10 eine Eingriffsfläche 12 entsteht.

Zu jedem Schneckenradsegment 6 gehört eine ebenfalls mit Hilfe eines Stiftes 9 in dem Ansatz gelagerte Schnecke 8. Diese Schnecke 8 ist durch ein Werkzeug von außen bei 13 betätigbar, d.h. drehbar.

Bei der dargestellten Ausführungsform sind in jedem Ansatz vier Schneckenradsegmente 6 und vier Schnecken 8 vorgesehen. Bei der Ausführungsform nach Fig. 1 liegen diese bei den gegenüberliegenden Ansätzen in einer Ebene. Bei der Ausführungsform nach Fig. 2 sind die Ebenen, in denen sie angeordnet sind, um 90° zueinander gedreht. Die Anzahl und Anordnung der Schneckenradsegmente und der Schnecken hängt von der Art der zu verbindenden Aufnahmeteile ab. Wenn nur eine Reihe von Quer- oder Paßbohrungen vorgesehen sind, sind vorzugsweise auch nur zwei Schneckenradsegmente und Schnecken vorgesehen.

Zum Herstellen einer Verbindung, beispielsweise derjenigen nach Fig. 1, wird die Kupplung 4 mit den beiden Ansätzen 5 zuerst in die entsprechende Stirnseite eines Aufnahmeteils 1 eingesteckt. Das Schneckenradsegment 6 befindet sich dann in der in Fig. 1 oben gezeigten Stellung, d.h. die Eingriffsfläche 12 ist zurückgeschwenkt. Entsprechend wird das andere Aufnahmeteil 2 dann auf den anderen Ansatz bei zurückgeschwenkten Schneckenradsegmenten aufgesteckt. Mit Hilfe eines Werkzeuges, beispielsweise eines Akkuschraubers, können die Schnecken dann in Drehung versetzt werden, um die Eingriffsflächen 12 des zugehörigen Schneckenradsegmentes gegen den Mantel der entsprechenden Quer- oder Paßbohrung 14 zu schwenken. Hierbei wird der Ansatz fest in das Aufnahmeteil hineingezogen und gleichzeitig wird eine Verbindung hergestellt, die nur dadurch wieder lösbar ist, daß die Schnecken jeweils in entgegengesetzter Richtung gedreht werden. Die Betätigung durch die Werkzeugaufnahmen 13 erfolgt in derselben Öffnung, in der die Eingriffsfläche des zugehörigen Schneckenradsegmentes zur Anlage gelangt. All dieses wird beim Betrachten der Zeichnungen deutlich.

Bei der Ausführungsform nach Fig. 2 sind die Ebenen, in denen die Ansätze 5 Schneckenradsegmente und Schnecken aufweisen, um 90° zueinander gedreht.

Bei der Ausführungsform nach Fig. 3 dient die Kupplung mit einem Ansatz 5 der Befestigung einer Abschlußplatte 3.

Es ist ohne weiteres einzusehen, daß auch mehr als zwei Aufnahmeteile miteinander verbunden werden können, wenn eine entsprechende Anzahl von Ansätzen an einer Kupplung entsprechend sternförmig vorgesehen ist. Die Aufnahmeteile fluchten dann nicht so, wie in den Fig. 1 und 2 dargestellt miteinander, sondern sie stehen in einem Winkel, beispielsweise, aber nicht zwangsläufig, in einem rechten Winkel zueinander. Die Längsachsen der Aufnahmeteile gehen aber immer durch den Mittelpunkt M der aneinander angrenzenden Stirnflächen, um für die definierte und reproduzierbare Lage der Paß- und Querbohrungen in dem vorgegebenen Rastermaß der einzelnen zu verbindenden Aufnahmeteile zu sorgen.

Bei der dargestellten Ausführungsform ist der quaderförmige Hohlraum innen bei 16 bearbeitet, um für ein entsprechend paßgenaues Anordnen der Ansätze zu sorgen.

## Patentansprüche

1. Kupplung für quaderförmige Aufnahmeteile (1,2) zum Aufspannen von Werkstücken in definierter und reproduzierbarer Lage, wobei die Aufnahmeteile mit querschnittsgleichen, in regelmäßigen Koordinatenbeständen angeordneten Paß- und Querbohrungen (14) versehen sind, mit einen Ansatz (5), der paßgenau in den Hohlraum an der zu verbindenden Stirnseite eines Aufnahmeteils (1,2) einsteckbar ist, und
in dem mehrere Hakenelemente angeordnet und in den formschlüssigen Eingriff mit dem Mantel einer angrenzenden Paß- oder Querbohrung (14) schwenkbar sind,
**dadurch gekennzeichnet, daß**
die Hakenelemente als um ihren Mittelpunkt drehbar in dem Ansatz (5) gelagert und als Schneckenradsegmente (6) ausgebildet sind,
daß jedes Schneckenradsegment (6) durch einen in dem Ansatz gelagerte Schnecke (8) betätigbar ist, und
daß die Schnecke (8) durch dieselbe Bohrung (14) zur Betätigung zugänglich ist.

2. Kupplung nach Anspruch 1, **gekennzeichnet durch** mindestens zwei Ansätze (5) mit Hakenelementen bzw. Schnekkenradsegmenten, deren Längsachsen miteinander fluchten oder in einem Winkel zueinander verlaufen, sich aber auf dem Mittelpunkt (M) der Verbindungsebenen bzw. der zu verbindenden Stirnseiten schneiden.

## Claims

1. Coupling for parallelepipedic mounting parts (1, 2) for chucking workpieces in a clearly defined, reproducible position, the mounting parts being provided with equal cross-section gauge and cross holes (14) having regular coordinate spacings, with a lug (5), which can be inserted in accurately fitting manner in the cavity on the end face of a mounting part (1, 2) to be connected and where several hook elements are provided and are pivotable in positive engagement with the jacket of an adjacent gauge or cross hole (14), **characterized in that** the hook elements are mounted in the lug (5) so as to rotate about the centre thereof and are constructed as worm wheel quadrants (6), that each worm wheel quadrant (6) is operable by a work (8) mounted in the lug and that the worm (8) is accessible for actuation through the same hole (14).

2. Coupling according to claim 1, **characterized by** at least two lugs (5) with hook elements or worm wheel quadrants, whose longitudinal axes are aligned with one another or are at an angle to one another, but intersect at the centre (M) of the connecting planes or the end faces to be connected.

## Revendications

1. Accouplement pour des pièces réceptrices (1, 2) de forme parallélépipédique pour le serrage de pièces à usiner dans une position définie et reproductible, les pièces réceptrices étant munies de forures parallèles et transversales (14) de mêmes sections, disposées en coordonnées régulières, avec un embout (5), qui peut être introduit avec précision dans la cavité creuse du côté frontal à relier d'une pièce réceptrice (1, 2), et dans lequel sont disposés plusieurs éléments en forme de crochets, qui peuvent être pivotés pour un engrènement par complémentarité de forme avec l'enveloppe d'une forure parallèle ou transversale voisine (14), **caractérisé en ce que** les éléments en forme de crochets sont logés dans l'embout (5) de manière mobile en rotation autour de leur point central et sont conçus comme segments de roue à denture hélicoïdale (6), **en ce que** chaque segment de roue à denture hélicoïdale (6) peut être actionné par une vis (8) logée dans l'embout et **en ce que** la vis (8) est accessible par la même forure (14) pour son actionnement.

2. Accouplement selon la revendication 1, **caractérisé par** au moins deux embouts (5) avec des éléments en forme de crochets ou des segments de roue à denture hélicoïdale, dont les axes longitudinaux sont disposés en alignement ou avec un angle l'un par rapport à l'autre, mais qui se coupent au point central (M) des plans de liaisons ou des côtés frontaux à relier.
